# FASCICULE DE BREVET EUROPEEN

(11) **EP 3 418 937 B1**
(45) Date de publication et mention de la délivrance du brevet: **04.08.2021**
(21) Numéro de dépôt: 18177036.3
(22) Date de dépôt: 11.06.2018
(51) Int. Cl.: G06F 21/75

(54) **PROCÉDÉ POUR CRÉER UN LEURRE D'UN FONCTIONNEMENT D'UN CIRCUIT INTÉGRÉ ET CIRCUIT INTÉGRÉ CORRESPONDANT**
VERFAHREN ZUR HERSTELLUNG EINES VORGETÄUSCHTEN BETRIEBS EINES INTEGRIERTEN SCHALTKREISES, UND ENTSPRECHENDER INTEGRIERTER SCHALTKREIS
METHOD FOR CREATING A DECOY OF AN OPERATION OF AN INTEGRATED CIRCUIT AND CORRESPONDING INTEGRATED CIRCUIT

(30) Priorité: 22.06.2017 FR 1755687
(43) Date de publication de la demande: 26.12.2018
(73) Titulaire: STMicroelectronics (Rousset) SAS, 13790 Rousset (FR)
(72) Inventeur: ORDAS, Thomas, 83470 Pourcieux (FR); SARAFIANOS, Alexandre, 83910 Pourrieres (FR)
(74) Mandataire: Casalonga

(56) Documents cités:
- EP-A1- 3 211 626
- CN-U- 206 116 394

## Description

Des modes de mise en œuvre et de réalisation de l'invention concernent les circuits intégrés, notamment mais non exclusivement ceux comportant des modules sécurisés, et en particulier la protection de ce type de circuit contre les analyses par canaux auxiliaires, connues par l'homme du métier sous la dénomination anglo-saxonne «Side channel analysis», et tout particulièrement contre les analyses des signaux électromagnétiques produits par le circuit intégré lors de son fonctionnement. CN206116394U-EP16181835 décrit un système de protection d'un circuit.

En fonctionnement, un circuit intégré produit des signaux électromagnétiques par l'intermédiaire des pistes métalliques du circuit intégré, par exemple lors des commutations de ses composants logiques. En analysant ces signaux électromagnétiques, à l'aide par exemple d'une antenne et d'algorithmes mathématiques dédiés, il est possible d'obtenir des informations sur les opérations effectuées ainsi que sur les données manipulées et/ou sur leurs occurrences.

Il existe par conséquent un besoin de protéger un circuit intégré contre de telles analyses de signaux électromagnétiques.

A cet égard, il est proposé selon un mode de mise en œuvre et de réalisation, de créer un leurre simulant le fonctionnement d'un module du circuit intégré à protéger et situé spatialement à un autre endroit du substrat que celui du module.

Ainsi, selon un mode de mise en œuvre et de réalisation, il est proposé un procédé et un dispositif permettant de simuler les émissions électromagnétiques d'un module de manière à rendre encore plus difficile une éventuelle déduction des opérations effectuées par le module.

Selon un aspect, il est proposé un procédé pour créer un leurre d'un fonctionnement d'au moins un module situé dans au moins une première zone d'un substrat semi-conducteur d'un circuit électronique intégré, comprenant une disposition d'au moins une première antenne au-dessus d'au moins une deuxième zone du circuit intégré, différente de ladite au moins une première zone, une génération d'au moins un signal électrique de leurre à partir d'au moins un premier signal électrique caractéristique d'un fonctionnement dudit au moins un module et d'au moins un paramètre pseudo-aléatoire, et une circulation dudit au moins un signal électrique de leurre dans ladite au moins une première antenne de façon à générer au moins un rayonnement électromagnétique de leurre.

En d'autres termes, on émet des signaux électromagnétiques reproduisant le fonctionnement d'un module réalisé dans une zone de substrat semi-conducteur, la source des signaux étant à un endroit différent du substrat que celui où se trouve ledit module.

La circulation du signal électrique peut comprendre la génération d'un signal électrique de leurre comprenant la génération du premier signal par ledit module, et une application pseudo-aléatoire d'un retard sur certains au moins des fronts dudit premier signal.

On obtient ainsi un signal électrique de leurre ayant ici un facteur de forme (ladite au moins une caractéristique) pseudo-aléatoire.

Selon un mode de mise en œuvre, lorsque ledit module est en fonctionnement, la génération dudit au moins un premier signal électrique comprend une délivrance d'au moins un signal électrique par ledit module lors de son fonctionnement.

Selon un autre mode de mise en œuvre, la génération dudit au moins un premier signal électrique comprend un stockage d'au moins un signal électrique délivré par ledit module lors de son fonctionnement, et une restitution du signal électrique stocké lorsque ledit module n'est pas en fonctionnement.

Lorsque le module fonctionne ou ne fonctionne pas, il délivre un signal électrique.

Selon un mode de mise en œuvre, on dispose la première antenne et au moins une deuxième antenne au-dessus de ladite au moins d'une troisième zone du circuit intégré différente de ladite au moins première zone et ladite au moins deuxième zone, le procédé comprenant en outre une sélection d'au moins une desdites antennes, et une circulation dudit signal électrique de leurre dans ladite au moins une antenne sélectionnée.

Selon un autre aspect, il est proposé un circuit intégré, comprenant au moins un module situé dans au moins une première zone d'un substrat semi-conducteur du circuit intégré, et au moins une cellule de leurre comportant au moins une première antenne au-dessus d'au moins une deuxième zone du circuit intégré, différente de ladite au moins une première zone, des moyens de génération configurés pour générer au moins un signal électrique de leurre à partir d'au moins un premier signal électrique caractéristique d'un fonctionnement dudit au moins un module et d'au moins un paramètre pseudo-aléatoire, et pour faire circuler ledit au moins un signal électrique de leurre dans ladite au moins une première antenne de façon à générer au moins un rayonnement électromagnétique de leurre.

Les moyens de génération peuvent comprendre des moyens de retard pour appliquer de façon pseudo-aléatoire un retard sur certains au moins des fronts dudit premier signal.

Les moyens de retard peuvent être configurés pour appliquer de façon pseudo-aléatoire un retard fixe ou variable sur certains au moins des fronts dudit premier signal.

Selon un mode de réalisation, le circuit intégré comprend en outre une région d'interconnexion (connu par l'homme du métier sous l'acronyme BEOL : « Back End Of Lines ») comprenant plusieurs niveaux de métallisation dont au moins un niveau de métallisation comprend au moins une piste métallique formant au moins une partie de ladite au moins une première antenne.

Selon un autre mode de réalisation, le circuit intégré comprend la première antenne et au moins une deuxième antenne recouvrant une troisième zone différente de ladite au moins une première zone et de ladite au moins une deuxième zone, la cellule de leurre comprenant des moyens de sélection configurés pour sélectionner au moins l'une desdites première et deuxième antennes de façon à délivrer ledit signal électrique de leurre à ladite au moins une antenne sélectionnée.

La première antenne et ladite au moins une deuxième antenne peuvent être situées dans un même niveau de métallisation de la région d'interconnexion du circuit.

Selon un autre mode de réalisation, la première antenne et ladite au moins une deuxième antenne, sont situées dans des niveaux de métallisation distincts de la région d'interconnexion du circuit.

Les moyens de sélection peuvent comprendre un registre de contrôle et des portes logiques couplées entre lesdites antennes et ledit registre de contrôle.

D'autres avantages et caractéristiques de l'invention apparaîtront à l'examen de la description détaillée de modes de mise en œuvre et de réalisation de l'invention, nullement limitatifs, et des dessins annexés sur lesquels :

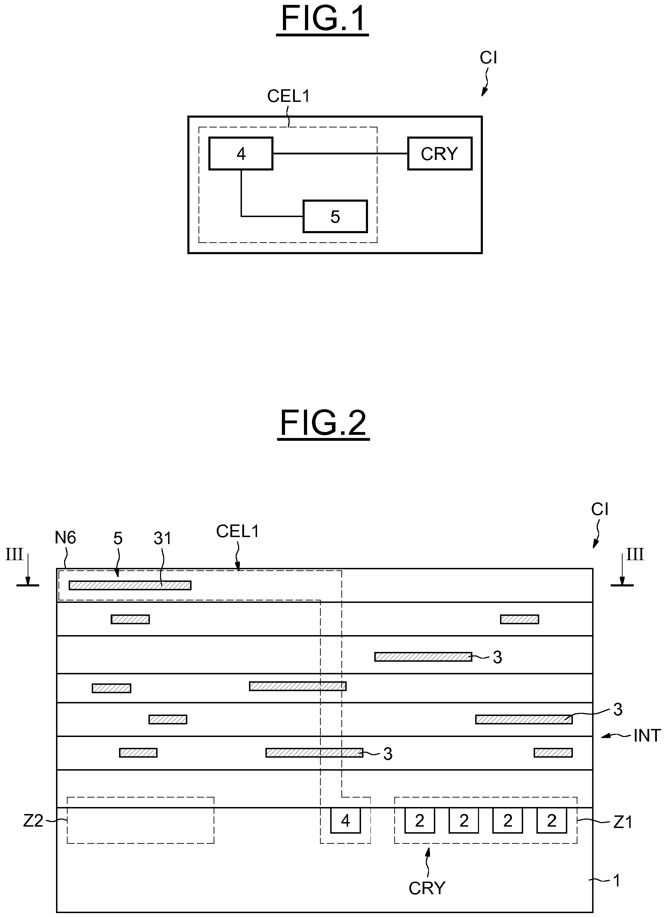

- les figures 1 à 7 illustrent des modes de mise en œuvre et de réalisation de l'invention.

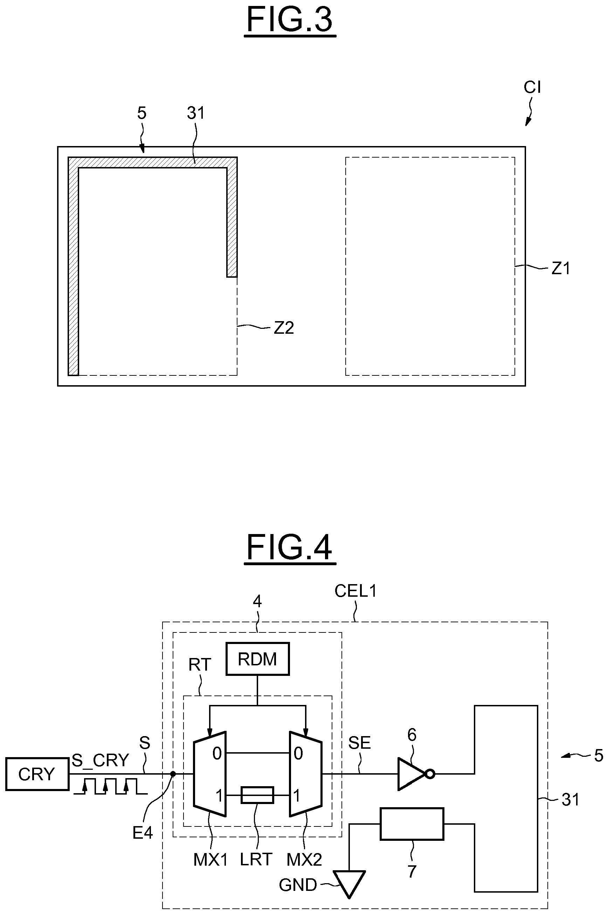

Les figures 1 et 2 illustrent un circuit intégré CI, et la figure 3 est une vue partielle en coupe selon la ligne de coupe III-III de la figure 2.

Le circuit intégré CI comporte un module cryptographique CRY relié à une cellule de leurre CEL1. La cellule de leurre CEL1 comprend des moyens de génération 4 reliés à une antenne émettrice 5.

Le circuit intégré CI comporte un substrat semi-conducteur 1, dans lequel une pluralité de composants 2 a été réalisée dans une zone Z1 du circuit intégré.

Les composants comportent ici notamment des portes logiques, formant par exemple le module cryptographique CRY destiné notamment à réaliser des opérations de manière sécurisée.

Le substrat 1 est surmonté par une région d'interconnexion INT (connue par l'homme du métier sous l'acronyme anglo-saxon BEOL : « Back End Of Line »), comportant plusieurs niveaux de métal comportant chacun une ou plusieurs pistes métalliques 3 enrobées dans un matériau isolant (« Intermetal dielectric » selon une dénomination anglo-saxonne bien connue de l'homme du métier).

Certaines des pistes métalliques 3 des niveaux de métal sont des pistes d'interconnexion reliant certains au moins des composants 2 de la zone Z1 du circuit intégré entre eux par l'intermédiaire de vias (non représentées à des fins de simplification).

D'autres pistes métalliques peuvent être par exemple des pistes de redistribution de l'alimentation ou être reliées à la masse.

Le niveau six N6 de métallisation, qui ici est le niveau le plus haut, comporte une unique piste métallique 31 qui n'est pas directement couplée à des composants du module cryptographique CRY, mais comme il sera vu ci-après, forme l'antenne émettrice 5 couplée par l'intermédiaire de vias aux moyens de génération 4 de la cellule de leurre CEL1. Les moyens de génération 4 sont réalisés dans et sur le substrat 1 et configurés pour générer un signal électrique de leurre SE qui comporte une caractéristique pseudo-aléatoire.

Les moyens de génération 4 sont reliés au module cryptographique CRY et situés à un endroit quelconque du substrat 1, par exemple comme représenté ici, en-dehors du module cryptographique CRY.

La piste métallique 31 est située dans un niveau de métallisation et au-dessus d'une deuxième zone Z2 du circuit CI différente de la première zone Z1.

Dans cet exemple, le niveau six de métallisation N6 n'est donc pas un niveau d'interconnexion car il ne comporte pas de piste métallique 3 reliant certains au moins des composants 2 de la zone Z1 du circuit entre eux, mais il est toutefois réalisé selon le même procédé que celui utilisé pour réaliser les différents niveaux de métal.

Cela étant, il serait tout à fait possible d'envisager que le niveau six de métallisation N6 comporte des pistes métalliques d'interconnexion s'étendant par exemple à l'intérieur du périmètre délimité par la piste métallique 31.

Il convient de noter que l'antenne émettrice 5 pourrait comprendre plusieurs boucles métalliques situées à des niveaux de métallisations différents qui ne recouvrent pas le module cryptographique CRY et reliées par des vias.

La figure 4 est une représentation schématique d'un exemple de réalisation des moyens de génération 4 reliés au module cryptographique CRY, et configurés pour générer le signal électrique de leurre SE.

L'antenne émettrice 5 comporte la piste métallique 31 dont une première extrémité est couplée à un élément tampon 6 (« Buffer » selon la dénomination anglo-saxonne) servant classiquement à amplifier et mettre en forme le signal de leurre SE généré par les moyens de génération 4.

Un élément capacitif 7 est couplé entre une seconde extrémité de la piste métallique 31 et la masse GND. L'élément capacitif est ici utilisé pour tirer un courant vers la masse GND.

L'élément tampon 6 et l'élément capacitif 7 sont des composants réalisés dans et/ou sur le substrat semi-conducteur 1, et sont électriquement connectés à la première piste métallique 31 par des vias.

Les moyens de génération 4 du signal électrique SE comprennent une entrée E4 reliée à une sortie S_CRY du module cryptographique CRY et couplée à un circuit de retard RT, et un générateur de valeurs pseudo-aléatoires RDM dont la sortie est également couplée au circuit de retard RT.

Le module cryptographique CRY émet un premier signal électrique S sur sa sortie S_CRY qui est représentatif d'un fonctionnement du module, par exemple tout ou partie d'une activité cryptographique ou d'une autre activité.

Le circuit de retard RT comporte par exemple une ligne à retard LRT configurée pour appliquer un retard aux fronts montants du premier signal électrique S émis par le module cryptographique CRY.

Cette ligne à retard LRT est connectée par l'intermédiaire d'un premier multiplexeur MX1 à la sortie S_CRY du module CRY et connectée par l'intermédiaire d'un deuxième multiplexeur MX2 à l'entrée de l'élément tampon 6.

Un chemin direct, c'est-à-dire sans retard, est également connecté entre les autres entrées des deux multiplexeurs.

Ces multiplexeurs MX1 et MX2 sont commandés par la valeur binaire 0 ou 1 délivrée par le générateur de valeurs pseudo-aléatoires RDM.

En fonction de la valeur générée par le générateur RDM, le circuit de retard RT peut ou non sélectionner la ligne à retard LRT, de manière à ce que certains au moins des fronts montants du premier signal électrique S émis par le module cryptographique CRY soient retardés ou non retardés de façon pseudo-aléatoire.

Alors que dans ce mode de réalisation le retard de la ligne à retard LRT est fixe (constant), il serait possible, en variante, de prévoir une ligne à retard configurée pour avoir un retard variable, par exemple de façon pseudo-aléatoire, en fonction de la valeur logique délivrée par un autre générateur de nombres pseudo-aléatoires.

Lorsque le module cryptographique CRY traite des opérations de cryptage, la sortie S_CRY émet un signal électrique S carré qui reproduit tout ou partie de l'activité du module CRY.

Ainsi, de la même manière que les pistes métalliques d'interconnexion 3 génèrent des signaux électromagnétiques en fonction des opérations effectuées par le module cryptographique CRY, la piste métallique 31 de l'antenne 5 génère lorsqu'elle est parcourue par le signal de leurre SE, des signaux électromagnétiques additionnels de leurre correspondant au premier signal électrique S retardé d'un retard pseudo-aléatoire qui, en s'ajoutant aux signaux électromagnétiques émis par les pistes métalliques 3, rendent plus difficile l'analyse de la signature électromagnétique globale du circuit électronique intégré CI.

Ces signaux de leurre reproduisent le fonctionnement d'un deuxième module cryptographique fonctionnant en même temps que le module cryptographique CRY.

Lorsque le module cryptographique CRY ne traite pas d'opérations de cryptage, la sortie S_CRY restitue un signal électrique S stocké dans une mémoire et qui a été délivré par le module CRY lors de son fonctionnement, c'est-à-dire lorsqu'il traite des opérations de cryptage.

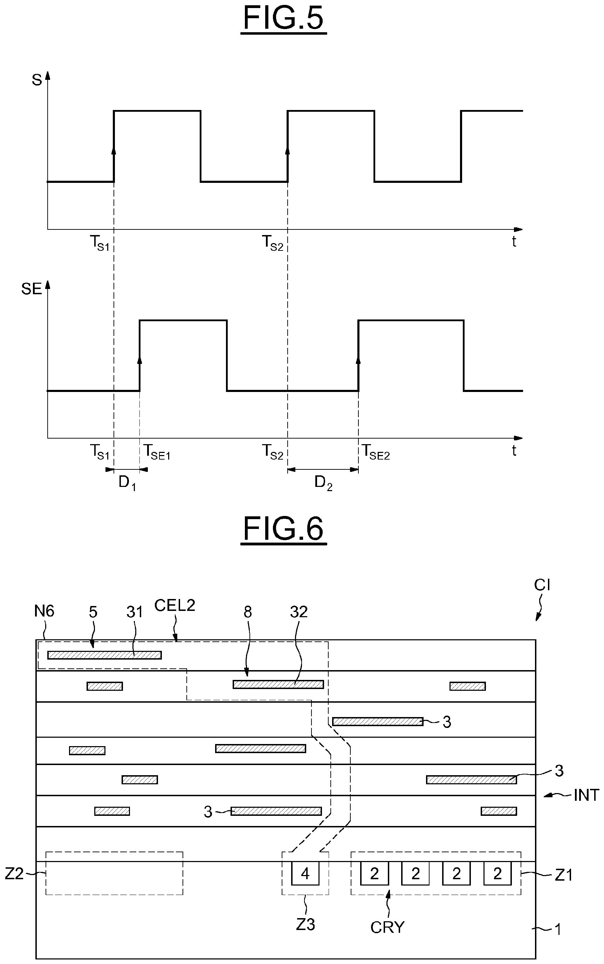

La figure 5 illustre l'évolution temporelle de signaux S et SE.

On note ici que le premier front montant à l'instant T_{SE1} du signal SE émis par les moyens de génération 4 est retardé d'une durée D1 par rapport au premier front montant à l'instant T_{S1} du signal S émis par le module cryptographique CRY.

On note également que le deuxième front montant à l'instant T_{SE2} du signal SE émis par les moyens de génération 4 est retardé d'une durée D2 par rapport au premier front montant à l'instant T_{S2} du signal S émis par le module cryptographique CRY, les durées D1 et D2 étant différentes et choisies de manière pseudo-aléatoire par le générateur de valeurs pseudo-aléatoires RDM.

Ainsi, la piste métallique 31 de l'antenne 5 génère des signaux électromagnétiques correspondant au fonctionnement du module cryptographique CRY retardée d'un retard pseudo-aléatoire.

De plus, comme la piste métallique 31 de l'antenne 5 est déportée du module cryptographique CRY, il est plus difficile de localiser le module cryptographique CRY dans le circuit électronique intégré CI.

En effet, si le module cryptographique CRY est actif, l'analyse des signaux électromagnétiques révèle deux signaux retardés l'un par rapport à l'autre d'une durée pseudo-aléatoire provenant de deux endroits différents du circuit intégré CI.

Ce retard entre les deux signaux empêche la resynchronisation des deux signaux.

Si le module cryptographique CRY n'est pas actif, la piste métallique 31 de l'antenne 5 émet un signal reproduisant le fonctionnement d'un module cryptographique fictif provenant d'un autre endroit du circuit électronique intégré CI de celui où se trouve le module cryptographique CRY.

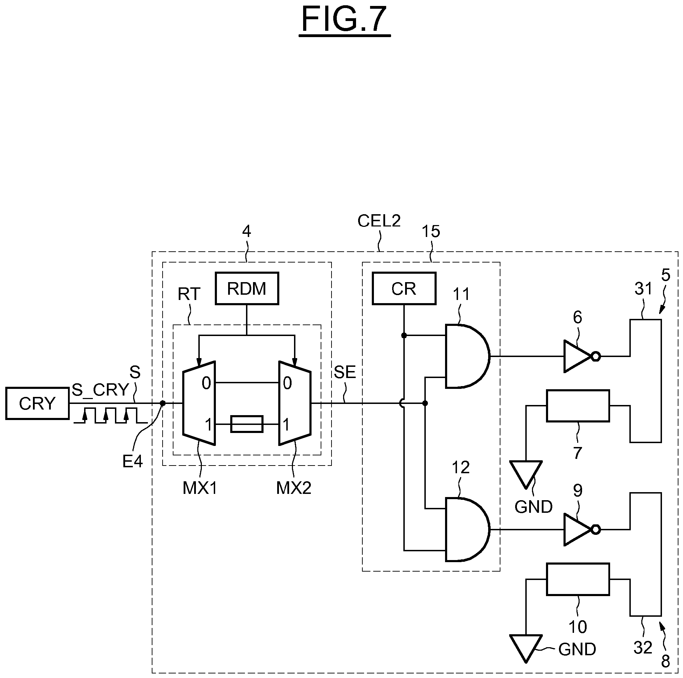

Selon un autre mode de réalisation illustré sur les figures 6 et 7, le circuit électronique intégré CI comporte une deuxième antenne 8 comportant une deuxième piste métallique 32 située dans le niveau cinq de métal N5 et recouvrant une troisième zone Z3 du substrat semi-conducteur 1 différente des zones Z1 et Z2.

Selon un autre mode de réalisation non représenté, l'antenne 8 est superposée à l'antenne 5, en d'autres termes l'antenne 8 recouvre la zone Z2.

Comme l'illustre la figure 7, le circuit intégré comporte une cellule de leurre CEL 2 comportant des moyens de sélection 15 couplés aux moyens de génération 4 et aux première et deuxième antennes 5 et 8.

Les moyens de sélection 15 comprennent dans cet exemple de réalisation un registre de contrôle CR, une première porte logique 11 de type « ET » et une deuxième porte logique 12 de type « ET », et sont configurés pour sélectionner la ou les antennes qui recevront le signal électrique SE.

Les deux portes logiques 11 et 12 comportent chacune deux entrées, dont une première entrée est couplée au registre de contrôle CR, et une deuxième entrée est couplée à la sortie des moyens de génération 4.

La première porte logique 11 comporte une sortie couplée à la première antenne 5 et la deuxième porte logique 12 comporte une sortie couplée à la deuxième antenne 8.

Ainsi, lors du fonctionnement du circuit, le registre de contrôle CR met à un les premières entrées des portes logiques couplées aux antennes qu'il sélectionne, de manière à ce que lors de la génération d'un front montant du signal électrique SE, seules les portes logiques sélectionnées par le registre de contrôle CR transmettent le signal électrique SE à l'antenne qui leur est associée.

La sélection des antennes par le registre de contrôle CR peut dépendre des opérations effectuées par le module cryptographique CRY, ou en variante, se faire de manière pseudo-aléatoire.

Il convient de noter que les modes de mise en œuvre et de réalisation présentés ici ne sont nullement limitatifs. Notamment, bien qu'il ait été présenté ici des circuits intégrés comportant une ou deux antennes, il est tout à fait possible d'envisager un circuit intégré comportant un nombre plus important d'antennes, dont les pistes métalliques sont situées dans un ou plusieurs niveaux de métal, au-dessus d'une ou plusieurs zones du circuit intégré ne recouvrant pas le module cryptographique CRY.

Par ailleurs alors que la caractéristique pseudo-aléatoire du signal électrique SE décrite ci-avant était le facteur de forme du signal, il serait possible d'envisager d'autres caractéristiques du signal qui pourraient être modifiées de façon pseudo-aléatoire, comme par exemple son amplitude et/ou sa phase.

## Revendications

1. Procédé pour créer un leurre d'un fonctionnement d'au moins un module (CRY) situé dans au moins une première zone (Z1) d'un substrat semi-conducteur (1) d'un circuit électronique intégré (CI), comprenant une disposition d'au moins une première antenne (5) au-dessus d'au moins une deuxième zone (Z2) du circuit intégré, différente de ladite au moins une première zone, une génération d'au moins un signal électrique de leurre (SE) à partir d'au moins un premier signal électrique (S) caractéristique d'un fonctionnement dudit au moins un module et d'au moins un paramètre pseudo-aléatoire, le premier signal électrique étant généré par ledit au moins un module et délivré sur une sortie dudit au moins un module, et une circulation dudit au moins un signal électrique de leurre (SE) dans ladite au moins une première antenne (5) de façon à générer au moins un rayonnement électromagnétique de leurre, ledit module étant apte à générer et à délivrer sur une sortie dudit module ledit au moins un premier signal électrique.

2. Procédé selon la revendication 1, dans lequel la génération du signal électrique de leurre comprend la génération du premier signal (S) par ledit module (CRY), et une application pseudo-aléatoire d'un retard sur certains au moins des fronts dudit premier signal (S).

3. Procédé selon l'une quelconque des revendications 1 et 2, dans lequel le retard est fixe ou variable.

4. Procédé selon l'une des revendications précédentes, dans lequel, lorsque ledit module (CRY) est en fonctionnement, la génération dudit au moins un premier signal électrique (S) comprend une délivrance d'au moins un signal électrique par ledit module lors de son fonctionnement.

5. Procédé selon l'une des revendications 1 à 3, dans lequel la génération dudit au moins un premier signal électrique (S) comprend un stockage d'au moins un signal électrique délivré par ledit module lors de son fonctionnement, et une restitution du signal électrique stocké lorsque ledit module n'est pas en fonctionnement.

6. Procédé selon l'une quelconque des revendications 1 à 3, dans lequel on dispose la première antenne (5) et au moins une deuxième antenne (8) au-dessus d'une troisième zone (Z3) du circuit intégré (CI) différente de ladite au moins une première zone (Z1) et ladite au moins deuxième zone (Z2), le procédé comprenant en outre une sélection d'au moins une desdites antennes (5, 8), et une circulation dudit signal électrique de leurre (SE) dans ladite au moins une antenne sélectionnée (5, 8).

7. Circuit intégré, comprenant au moins un module (CRY) situé dans au moins une première zone (Z1) d'un substrat semi-conducteur (1) du circuit intégré (CI), ledit au moins un module étant apte à générer au moins un premier signal électrique (S) caractéristique d'un fonctionnement dudit au moins un module (CRY) et à délivrer sur une sortie dudit module ledit au moins un premier signal électrique, et au moins une cellule de leurre (CEL1, CEL2) comportant au moins une première antenne (5) au-dessus d'au moins une deuxième zone (Z2) du circuit intégré, différente de ladite au moins une première zone (Z1), des moyens de génération (4) configurés pour générer au moins un signal électrique de leurre (SE) à partir dudit au moins un premier signal électrique (S) et d'au moins un paramètre pseudo-aléatoire, et pour faire circuler ledit au moins un signal électrique de leurre dans ladite au moins une première antenne de façon à générer au moins un rayonnement électromagnétique de leurre ledit module étant apte à générer et à délivrer sur une sortie dudit module ledit au moins un premier signal électrique.

8. Circuit intégré selon la revendication 7, dans lequel les moyens de génération (4) comprennent des moyens de retard (RT, RDM) pour appliquer de façon pseudo-aléatoire un retard sur certains au moins des fronts dudit premier signal (S).

9. Circuit intégré selon la revendication 8, dans lequel les moyens de retard (RT, RDM) sont configurés pour appliquer de façon pseudo-aléatoire un retard fixe ou variable sur certains au moins des fronts dudit premier signal (S).

10. Circuit intégré selon l'une quelconque des revendications 7 à 9, comprenant en outre une région d'interconnexion (INT) comprenant plusieurs niveaux de métallisation dont au moins un niveau de métallisation (N6) comprend au moins une piste métallique (31) formant au moins une partie de ladite au moins une première antenne (5).

11. Circuit intégré selon l'une quelconque des revendications 7 à 10, comprenant la première antenne (5) et au moins une deuxième antenne (8) recouvrant une troisième zone (Z3) différente de ladite au moins une première zone (Z1) et ladite au moins deuxième zone (Z2), la cellule de leurre (CEL2) comprenant des moyens de sélection (15) configurés pour sélectionner au moins l'une desdites première et deuxième antennes (5, 8) de façon à délivrer ledit signal électrique de leurre (SE) à ladite au moins une antenne sélectionnée.

12. Circuit intégré selon la revendication 11, dans lequel la première antenne (5) et ladite au moins une deuxième antenne (8) sont situées dans un même niveau de métallisation de la région d'interconnexion (INT) du circuit.

13. Circuit intégré selon la revendication 11, dans lequel la première antenne (5) et ladite au moins une deuxième antenne (8), sont situées dans des niveaux de métallisation (N6, N5) distincts de la région d'interconnexion (INT) du circuit.

14. Circuit intégré selon l'une quelconque des revendications 11 à 13, dans lequel les moyens de sélection (15) comprennent un registre de contrôle (CR) et des portes logiques (11, 12) couplées entre lesdites antennes (5, 8) et ledit registre de contrôle (CR).

## Patentansprüche

1. Verfahren zum Schaffen einer Vortäuschung eines Betriebs von mindestens einem Modul (CRY), das sich in mindestens einer ersten Zone (Z1) eines Halbleitersubstrats (1) eines integrierten elektronischen Schaltkreises (CI) befindet, umfassend eine Anordnung von mindestens einer ersten Antenne (5) über mindestens einer zweiten Zone (Z2) des integrierten Schaltkreises, die sich von der mindestens einen ersten Zone unterscheidet, eine Erzeugung von mindestens einem elektrischen Vortäuschungssignal (SE) aus mindestens einem ersten elektrischen Signal (S), das für einen Betrieb des mindestens einen Moduls charakteristisch ist, und mindestens einem pseudozufälligen Parameter, wobei das erste elektrische Signal durch das mindestens eine Modul erzeugt wird und auf einem Ausgang des mindestens einen Moduls geliefert wird, und eine Zirkulation des mindestens einen elektrischen Vortäuschungssignals (SE) in der mindestens einen ersten Antenne (5), um mindestens eine elektromagnetische Vortäuschungsstrahlung zu erzeugen, wobei das Modul dazu fähig ist, das mindestens eine erste elektrische Signal zu erzeugen und auf einem Ausgang des Moduls zu liefern.

2. Verfahren nach Anspruch 1, wobei die Erzeugung des elektrischen Vortäuschungssignals die Erzeugung des ersten Signals (S) durch das Modul (CRY) und eine pseudozufällige Anwendung einer Verzögerung auf bestimmte einige Kanten des ersten Signals (S) umfasst.

3. Verfahren nach einem der Ansprüche 1 und 2, wobei die Verzögerung festgelegt oder variabel ist.

4. Verfahren nach einem der vorhergehenden Ansprüche, wobei, wenn das Modul (CRY) im Betrieb ist, die Erzeugung des mindestens einen ersten elektrischen Signals (S) eine Lieferung von mindestens einem elektrischen Signal durch das Modul während seines Betriebs umfasst.

5. Verfahren nach einem der Ansprüche 1 bis 3, wobei die Erzeugung des mindestens einen ersten elektrischen Signals (S) eine Speicherung von mindestens einem elektrischen Signal, das durch das Modul während seines Betriebs geliefert wird, und eine Wiederherstellung des gespeicherten elektrischen Signals, wenn das Modul nicht im Betrieb ist, umfasst.

6. Verfahren nach einem der Ansprüche 1 bis 3, wobei die erste Antenne (5) und mindestens eine zweite Antenne (8) über einer dritten Zone (Z3) des integrierten Schaltkreises (CI), die sich von der mindestens einen ersten Zone (Z1) und der mindestens einen zweiten Zone (Z2) unterscheidet, angeordnet werden, wobei das Verfahren weiterhin eine Auswahl von mindestens einer der Antennen (5, 8) und eine Zirkulation des elektrischen Vortäuschungssignals (SE) in der ausgewählten mindestens einen Antenne (5, 8) umfasst.

7. Integrierter Schaltkreis, umfassend mindestens ein Modul (CRY), das sich in mindestens einer ersten Zone (Z1) eines Halbleitersubstrats (1) des integrierten Schaltkreises (CI) befindet, wobei das mindestens eine Modul dazu fähig ist, mindestens ein erstes elektrisches Signal (S), das für einen Betrieb des mindestens einen Moduls (CRY) charakteristisch ist, zu erzeugen und das mindestens eine erste elektrische Signal auf einem Ausgang des Moduls zu liefern, und mindestens eine Vortäuschungszelle (CEL1, CEL2), umfassend mindestens eine erste Antenne (5) über mindestens einer zweiten Zone (Z2) des integrierten Schaltkreises, die sich von der mindestens einen ersten Zone (Z1) unterscheidet, Erzeugungsmittel (4), die zum Erzeugen von mindestens einem elektrischen Vortäuschungssignal (SE) aus dem mindestens einen ersten elektrischen Signal (S) und mindestens einem pseudozufälligen Parameter und zum Zirkulierenlassen des mindestens einen elektrischen Vortäuschungssignals in der mindestens einen ersten Antenne konfiguriert sind, um mindestens eine elektromagnetische Vortäuschungsstrahlung zu erzeugen, wobei das Modul dazu fähig ist, das mindestens eine erste elektrische Signal zu erzeugen und auf einem Ausgang des Moduls zu liefern.

8. Integrierter Schaltkreis nach Anspruch 7, wobei die Erzeugungsmittel (4) Verzögerungsmittel (RT, RDM) zum pseudozufälligen Anwenden einer Verzögerung auf bestimmte einige Kanten des ersten Signals (S) umfassen.

9. Integrierter Schaltkreis nach Anspruch 8, wobei die Verzögerungsmittel (RT, RDM) zum pseudozufälligen Anwenden einer festgelegten oder variablen Verzögerung auf bestimmte einige Kanten des ersten Signals (S) konfiguriert sind.

10. Integrierter Schaltkreis nach einem der Ansprüche 7 bis 9, weiterhin umfassend eine Vernetzungsregion (INT), umfassend mehrere Metallisierungsebenen, von denen mindestens eine Metallisierungsebene (N6) mindestens einen Metallstreifen (31) umfasst, der mindestens einen Teil der mindestens einen ersten Antenne (5) bildet.

11. Integrierter Schaltkreis nach einem der Ansprüche 7 bis 10, umfassend die erste Antenne (5) und mindestens eine zweite Antenne (8), die eine dritte Zone (Z3) abdeckt, die sich von der mindestens einen ersten Zone (Z1) und der mindestens einen zweiten Zone (Z2) unterscheidet, wobei die Vortäuschungszelle (CEL2) Auswahlmittel (15) umfasst, die zum Auswählen von mindestens einer von der ersten und der zweiten Antenne (5, 8) konfiguriert sind, um das elektrische Vortäuschungssignal (SE) an die ausgewählte mindestens eine Antenne zu liefern.

12. Integrierter Schaltkreis nach Anspruch 11, wobei die erste Antenne (5) und die mindestens eine zweite Antenne (8) sich in derselben Metallisierungsebene der Vernetzungsregion (INT) des Schaltkreises befinden.

13. Integrierter Schaltkreis nach Anspruch 11, wobei die erste Antenne (5) und die mindestens eine zweite Antenne (8) sich in verschiedenen Metallisierungsebenen (N6, N5) der Vernetzungsregion (INT) des Schaltkreises befinden.

14. Integrierter Schaltkreis nach einem der Ansprüche 11 bis 13, wobei die Auswahlmittel (15) ein Prüfregister (CR) und Logikgatter (11, 12), die zwischen den Antennen (5, 8) und dem Prüfregister (CR) gekoppelt sind, umfassen.

## Claims

1. Method for creating a decoy of an operation of at least one module (CRY) located in at least one first zone (Z1) of a semiconductor substrate (1) of an integrated electronic circuit (CI), comprising arranging at least one first antenna (5) above at least one second zone (Z2) of the integrated circuit, that is different from said at least one first zone, generating at least one decoy electrical signal (SE) on the basis of at least one first electrical signal (S) that is characteristic of an operation of said at least one module and of at least one pseudo-random parameter, the first electrical signal being generated by said at least one module and delivered over an output of said at least one module, and circulating said at least one decoy electrical signal (SE) in said at least one first antenna (5) so as to generate at least one decoy electromagnetic radiation, said module being capable of generating and of delivering, over an output of said module, said at least one first electrical signal.

2. Method according to claim 1, wherein the generation of the decoy electrical signal comprises generating the first signal (S) by said module (CRY), and pseudo-randomly applying a delay to at least some of the edges of said first signal (S).

3. Method according to any one of claims 1 and 2, wherein the delay is fixed or variable.

4. Method according to one of the preceding claims, wherein, when said module (CRY) is in operation, the generation of said at least one first electrical signal (S) comprises delivering at least one electrical signal from said module during the operation thereof.

5. Method according to one of claims 1 to 3, wherein the generation of said at least one first electrical signal (S) comprises storing at least one electrical signal delivered by said module during the operation thereof, and retrieving the stored electrical signal when said module is not in operation.

6. Method according to any one of claims 1 to 3, wherein the first antenna (5) and at least one second antenna (8) are disposed above a third zone (Z3) of the integrated circuit (CI) that is different from said at least one first zone (Z1) and said at least second zone (Z2), the method further comprising selecting at least one of said antennas (5, 8), and circulating said decoy electrical signal (SE) in said at least one selected antenna (5, 8).

7. Integrated circuit comprising at least one module (CRY) located in at least one first zone (Z1) of a semiconductor substrate (1) of the integrated circuit (CI), said at least one module being able to generate at least one first electrical signal (S) that is characteristic of an operation of said at least one module (CRY) and to deliver said at least one first electrical signal over an output of said module, and at least one decoy cell (CEL1, CEL2) including at least one first antenna (5) above at least one second zone (Z2) of the integrated circuit, that is different from said at least one first zone (Z1), generating means (4) configured to generate at least one decoy electrical signal (SE) on the basis of said at least one first electrical signal (S) and on the basis of at least one pseudo-random parameter, and to circulate said at least one decoy electrical signal in said at least one first antenna so as to generate at least one decoy electromagnetic radiation, said module being capable of generating and of delivering, over an output of said module, said at least one first electrical signal.

8. Integrated circuit according to claim 7, wherein the generating means (4) comprise delay means (RT, RDM) for pseudo-randomly applying a delay to at least some of the edges of said first signal (S).

9. Integrated circuit according to claim 8, wherein the delay means (RT, RDM) are configured to pseudo-randomly apply a fixed or variable delay to at least some of the edges of said first signal (S).

10. Integrated circuit according to any one of claims 7 to 9, further comprising an interconnect region (INT) comprising a plurality of metallisation levels, at least one metallisation level (N6) whereof comprises at least one metal track (31) forming at least one part of said at least one first antenna (5).

11. Integrated circuit according to any one of claims 7 to 10, comprising the first antenna (5) and at least one second antenna (8) covering a third zone (Z3) that is different from said at least one first zone (Z1) and said at least one second zone (Z2), the decoy cell (CEL2) comprising selection means (15) configured to select at least one of said first and second antennas (5, 8) so as to deliver said decoy electrical signal (SE) to said at least one selected antenna.

12. Integrated circuit according to claim 11, wherein the first antenna (5) and said at least one second antenna (8) are located in one and the same metallisation level of the interconnect region (INT) of the circuit.

13. Integrated circuit according to claim 11, wherein the first antenna (5) and said at least one second antenna (8), are located in separate metallisation levels (N6, N5) of the interconnect region (INT) of the circuit.

14. Integrated circuit according to any one of claims 11 to 13, wherein the selection means (15) comprise a control register (CR) and logic gates (11, 12) that are coupled between said antennas (5, 8) and said control register (CR) .
